# EUROPEAN PATENT SPECIFICATION

(11) **EP 4 488 514 B1**
(45) Date of publication and mention of the grant of the patent: **31.12.2025**
(21) Application number: 23183670.1
(22) Date of filing: 05.07.2023
(51) Int. Cl.: F03D 80/50, F03D 80/55, H02K 7/18, H02K 15/00

(54) **METHOD FOR CLEANING A GENERATOR IN A WIND TURBINE**
VERFAHREN ZUR REINIGUNG EINES GENERATORS IN EINER WINDENERGIEANLAGE
PROCÉDÉ DE NETTOYAGE D'UN GÉNÉRATEUR DANS UNE ÉOLIENNE

(43) Date of publication of application: 08.01.2025
(73) Proprietor: Siemens Gamesa Renewable Energy A/S, 7330 Brande (DK)
(72) Inventor: Toft, Anders Saaby, 8700 Horsens (DK); Celiloglu, Rifat, 7100 Vejle (DK)
(74) Representative: SGRE-Association

(56) References cited:
- CN-A- 116 378 915
- JP-A- 2002 256 295
- US-A1- 2010 021 299
- RENEWABLEENERGYWORLDCONTENTTEAM: "An Innovative Approach to Cleaning Generator Windings", 6 January 2007 (2007-01-06), XP093104123, Retrieved from the Internet <URL:https://www.renewableenergyworld.com/baseload/hydropower/an-innovative-approach-to-cleaning-generator-windings/#gref> [retrieved on 20231121]

## Description

### FIELD OF THE INVENTION

The present invention relates to a method for cleaning a generator in a wind turbine and a method for operating a wind turbine.

### BACKGROUND

Generators in wind turbines are facing a grease leakage issue which is sourced by the main bearing of the generator. The leaking grease from the main bearing seals finds its way into segments of the generator that cannot be reached by cleaning apparatuses since the space between these segments and a generator housing is very limited, in particular only a few millimeters wide.

The grease may leak through drive-end stator plates and fill or clog airducts of the segments.

Further, the grease may leak through a collector tray and clog the drive-end coil heads of the segments.

Against this background, it is a problem to be solved by the present invention, to provide for a possibility to clean a generator, in particular the stator windings of a generator in a wind turbine from grease.

Documents considered during the patent prosecution are i.a.: CN 116 378 915 A, US 2010/021299 A1, JP 2002 256295 A and "An Innovative Approach to Cleaning Generator Windings"(2007-01-06), Retrieved from the Internet: https://www.renewableenergyworld.com/baseload/hydropower/an-innovative-approach-to-cleaning-generator-windings/#gref.

### SUMMARY

According to an aspect, the problem is solved by providing a method for cleaning a generator in a wind turbine, wherein the method comprises locking a rotor of the wind turbine, shutting off the generator, filling fresh cleaning agent into the generator, releasing the rotor, idling the rotor for at least a given cleaning time, locking the rotor again, removing the contaminated cleaning agent from the generator, releasing the rotor again, and starting the generator.

In the context of the present disclosure, shutting off a generator may involve disconnecting electrical connections by tripping/opening the circuit breakers between the generator and a rest of the turbine, such that the generator is free from electricity. Thus, starting the generator may involve connecting the electrical connection by closing opened circuit breakers between the generator and the wind turbine, such that the generator generates electrical energy, i.e. converts wind energy into electrical energy.

For shutting off the generator, the generator may be brought into a so-called LOTO state.

In the context of the present disclosure, idling the rotor of a wind turbine means using wind energy to circle the rotor without generating electrical energy.

In the context of the present disclosure, locking a rotor of a wind turbine prevents the rotor from moving. This locking may be caused by blocking a gear connected to the rotor or by engaging a brake connected to the rotor, for example.

The present invention is based on the principle that the generator of a wind turbine is filled with a cleaning agent and the rotor of the wind turbine is idled. It has been found out, that idling the rotor moves the generator together with the cleaning agent inside the generator. This movement causes mechanical stress between the cleaning agent and the generator, which causes rubbing off grease from the generator. In particular, this circulates the cleaning agent to non-accessible areas of the generator and dilutes grease in order for the grease to run off to more accessible areas.

The rotor may be idled for a time between 1 hour and 12 hours, for example.

It has been surprisingly found in an experimental procedure that the cleaning agent which is in a liquid state or becomes at least partially liquid during cleaning, does not cause any damage to the generator and, further, removes grease from the generator reliably.

In the context of the invention test be mentioned, that the single steps of the disclosed method are not necessarily required to be executed in the order as laid out, however, it is a favorable embodiment to execute those steps in the mentioned order.

According to an embodiment, the remove, contaminated cleaning agent is analyzed with respect to a criterion specifying the grade of contamination of the cleaning agent, and in case the grade of contamination is greater than a given threshold, the following steps are repeated until the grade of contamination is less or equal to the threshold: filling fresh cleaning agent into the generator, releasing the rotor, idling the rotor for at least the given cleaning time, locking the rotor again, and removing the contaminated cleaning agent from the generator.

By using a criterion specifying the grade of contamination of the cleaning agent, provides for an objective measure to evaluate whether the cleaning is fully contaminated and needs to be replaced or the cleaning agent is not fully contaminated, and the generator is clean.

Analyzing the cleaning agent with respect to the criterion specifying the grade of contamination of the cleaning agent may involve an optical inspection by eye or by using a spectrometer, for example.

According to an embodiment, the criterion comprises a reference color.

By using a reference color as a criterion specifying the grade of contamination of the cleaning agent, the contaminated cleaning agent can be evaluated easy and fast also in harsh conditions, such as in the nacelle of a wind turbine. Thus, by comparing the color of a contaminated cleaning agent with a reference color, the state of the contaminated cleaning agent and, therefore, the state of the generator can easily be assessed.

According to an embodiment, shutting off the generator comprises disconnecting electrical connection between the generator and the rest of the turbine.

By disconnecting the electrical connection between the generator and the rest of the turbine, it is ensured that no interaction between electrical energy in the generator and the cleaning agent is generated, which may damage the generator.

According to an embodiment, the method further comprises shutting off a cooling system for cooling the generator before filling fresh cleaning agent into the generator and starting the cooling system before starting the generator for drying the generator from the cleaning agent.

Since the cooling system, such as a number of fans, for example, are driven electrically, the cooling system should be shut off, in particular be brought into a LOTO state, in order to ensure that no electricity is induced from the cooling system into the cleaning agent.

By starting the cooling system before starting up the generator as such, a stream of air provided by the cooling system may be used for drying the generator from a rest of the cleaning agent inside the generator. Since the cooling system provides only a small amount of heat, the generator is not critically warmed up.

According to an embodiment, removing the contaminated cleaning agent from the generator comprises lowering a suction hose into a housing of the rotor, and sucking out the contaminated cleaning agent using a pump.

By using a hose, the hose can be lowered to a point at which the grease accumulates, such as the lowest point in the generator, for example. Of course, multiple points inside the generator may be used for sucking out contaminated cleaning agent.

A pump may be used for sucking out the contaminated cleaning agent, such as a pump driven by a driller, which is easy to handle and can by driven by electrical power from a battery.

According to an embodiment the fresh cleaning agent is filled into the generator through an opening in a wall of the generator inside a nacelle of the wind turbine.

By using an opening, such as a hatch, in an enclosure of the generator inside a nacelle of the wind turbine for filling the cleaning agent into the generator, dangerous operations outside of the nacelle can be avoided. The opening may be a hatch for maintenance of the generator.

According to an embodiment, the cleaning agent comprises dry grease remover.

Dry grease remover has surprisingly been found to generate excellent cleaning results and does not cause any damage to the insulation of the generator. Further, grease remover binds the grease such that the grease can be sucked out together with the grease remover using a pump.

The grease remover may comprise N-Paraffins, hydrocarbons, aliphatic hydrocarbons, mechanical components, such as abrasives and chemical components, such as bipolar chains and/or a binder.

A grease remover may be fluid such that the generator can be flushed by it, and/or it can have the form of a paste.

The grease remover may be non-waters-soluble.

The grease remover may have a density larger than 0.5 g/cm³, preferably larger than 0.6 g/cm³, more preferably larger than 0.7 g/cm³, furthermore preferably larger than 0.75 g/cm³, and/or lower than 0.9 g/cm³, preferably lower than 0.85 g/cm³, more preferably lower than 0.82 g/cm³, furthermore preferably lower than 0.8 g/cm³, and/or wherein the density is essentially 0.77 g/cm³.

The grease remover may have kinematic viscosity larger than 1.0 mm²/s, preferably larger than 1.3 mm²/s, more preferably larger than 1.5 mm²/s, furthermore preferably larger than 1.8 mm²/s, and/or lower than 3.0 mm²/s, preferably lower than 2.5 mm²/s, more preferably lower than 2.0 mm²/s, furthermore preferably lower than 1.9 mm²/s, and/or wherein the kinematic viscosity is essentially 1.88 mm²/s.

According to an embodiment, the grease remover is a dry grease remover or a dry cleaner, wherein in particular the dry grease remover or dry cleaner is a dry substance.

It has been come to light during an elaborated experiment, that a grease remover according to at least one of the aforementioned characteristics (density, kinematic viscosity, composition, and/or further characteristics) is specifically efficient when being applied in a rotor of a wind turbine.

According to an embodiment, the volume of cleaning agent filled in the generator is between 10 and 200 liters, in particular 15 and 100 liters, preferably between 20 and 80 liters, most preferably between 30 and 50 liters.

It has been surprisingly found in an experimental procedure that a volume of cleaning agent filled in the generator between 30 and 50 liters, in particular 40 liters, leads to the best cleaning results.

According to an embodiment, the method further comprises measuring a voltage at the generator, wherein the filling fresh cleaning agent into the generator is carried out only in case the measured voltage is zero.

By measuring the voltage at the generator upon completion of the cleaning process and dry out application, a short circuit in the generator caused by cleaning agent filled into the generator is prevented.

Additionally and/or alternatively a further aspect is disclosed, and/or in particular as an embodiment of one of a precedingly described aspect and/or embodiments, namely, a method for operating a wind turbine, in particular an offshore wind turbine, further in particular a floating offshore wind turbine, and/or for feeding electrical and/or chemical energy to an electricity and/or chemical grid, the method comprising the following steps:
executing steps of an embodiment or of a combination of embodiments of a method as disclosed supra, and/or operating an embodiment of a device as disclosed supra,
generating, by the wind turbine, electrical power and/or electrical energy, and in particular generating at least partially from the electrical energy, further in particular, by transforming electrical energy into hydrogen by electrolysis, chemical energy in form of a gas or liquid, in particular in the form of hydrogen,
transmitting, at least partially, the electrical power, the electrical energy, and/or the chemical energy to an energy receiving arrangement, in particular wherein the receiving arrangement is not positioned in international waters, is positioned onshore, and/or is positioned within a 12-miles-zone of a respective sovereign national state over which the respective state has jurisdiction, and supplying, at least partially, the electrical power, the electrical energy, and/or the chemical energy to an electrical and/or chemical utility grid, in particular to an onshore electrical and/or chemical utility grid and/or chemical/electrical storage.

The term "chemical energy" includes means for storing energy in a chemical substance such as in hydrogen. A chemical energy grid could for example be a gas (hydrogen) grid and/or storage device.

According to a third aspect, the present invention relates to the use of a cleaning fluid, in particular a grease remover, for cleaning a wind turbine, in particular a generator of a wind turbine.

It has surprisingly been found that a cleaning fluid, in particular a large amount of cleaning fluid, such as a grease remover, can be for cleaning a generator in a wind turbine.

### BRIEF DESCRIPTION OF THE DRAWINGS

The foregoing and other features and advantages of the invention will become further apparent from the following detailed description read in conjunction with the accompanying drawings. In the drawings, like reference numerals refer to like elements.
Fig. 1 shows a method for cleaning a generator in a wind turbine, according to an embodiment.
Fig. 2 shows a stator of a generator for a wind turbine consisting of a plurality of segments,
Fig. 3 shows a segment of the stator according to Fig. 1 in detail,
Fig. 4 shows a nacelle of a wind turbine with a generator.

### DETAILED DESCRIPTION

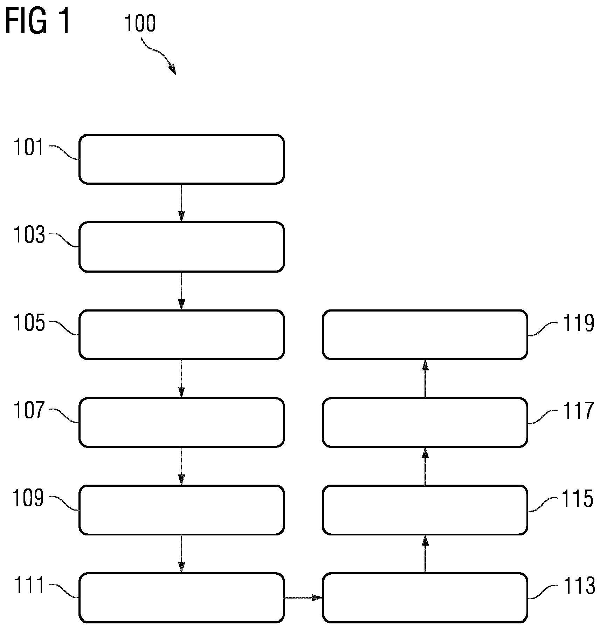

Fig. 1 shows a method 100 for cleaning a generator in a wind turbine.

The method 100 comprises a locking step 101, in which a rotor of the wind turbine is locked up, a shutting-off step 103, in which the generator is shut-off, a filling step 105, in which fresh cleaning agent is filled into the generator, a releasing step 107, in which the rotor is released, an idling step 109, in which the rotor is idled for at least a given cleaning time, a second locking step 111, in which the rotor is locked up again, a removal step 113, in which the contaminated cleaning agent is removed from the generator, a second releasing step 115, in which the rotor is released again, and a starting step 117, in which the generator is started.

Optionally, the method 100 comprises an analysis step 119, in which the removed and contaminated cleaning agent is analyzed with respect to a criterion specifying the grade of contamination of the cleaning agent, and in case the grade of contamination is greater than a given threshold, the filling step 105, the releasing step 107, the idling step, the second locking step 109 and the removal step 113 are repeated until the grade of contamination is less or equal to the threshold. Thus, the second releasing step 115 and the starting step 117 are carried out only in case the grade of contamination is less or equal to the given threshold.

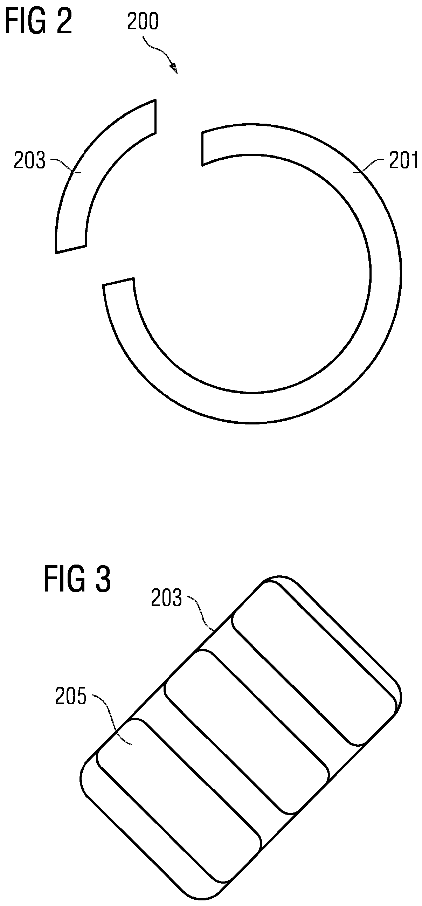

Fig. 2 shows a stator 201 of a generator for a wind turbine consisting of a plurality of segments 203.

In a wind turbine, the stator 201 is arranged in a housing of the rotor , forming the complete generator. Since a space between the stator 201 and the housing of the rotor has to be small, the windings of the stator 201 cannot be reached by a cleaning apparatus, such as a brush, for example.

In Fig. 3, a segment 203 is shown in detail. The segment 203 includes numerous windings 205, which are hard to access by mechanical apparatuses. Thus, the segment 203 is hard to clean. Further, grease from bearings of the wind turbine accumulates between the windings during operation of the wind turbine, thereby causing both, thermal and electrical problems.

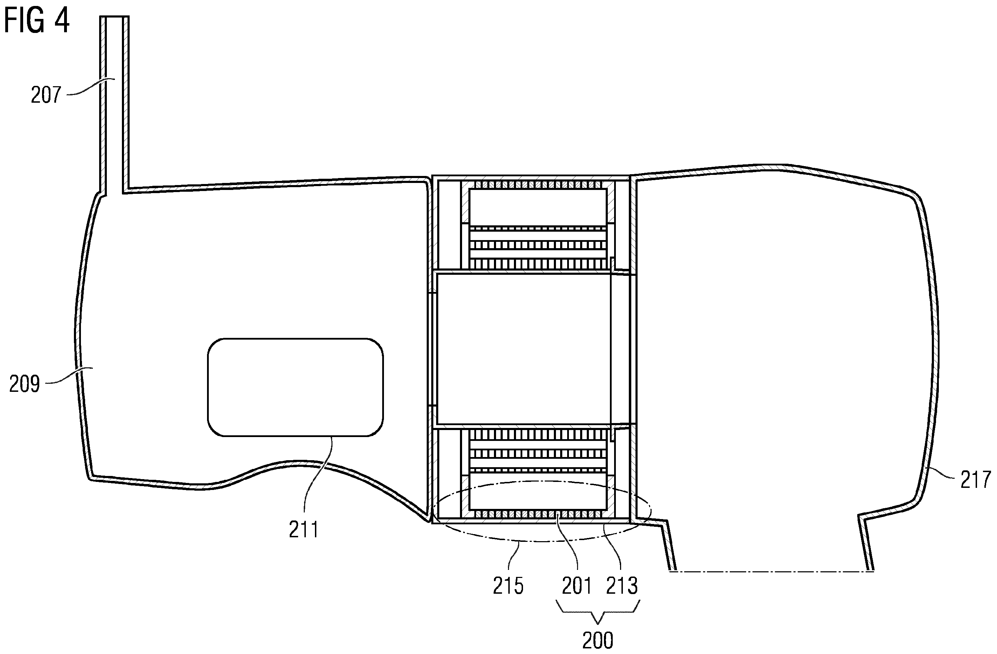

In Fig. 4 a nacelle 207 of a wind turbine is shown. The nacelle 207 includes a backend 209 in which auxiliary units, such as a cooling system 211 are located, a rotor 217 of the wind turbine forming a housing of the rotor 213 of a generator 200 including a stator 201.

A circle 215 marks a volume between the stator 201 and the housing of the rotor 213, which cannot be reached by cleaning apparatuses from outside the generator 200.

While specific embodiments are disclosed herein, various changes and modifications can be made without departing from the scope of the invention. The present embodiments are to be considered in all respects as illustrative and non-restrictive, and all changes coming within the meaning of the appended claims are intended to be embraced therein.

## Claims

1. A method (100) for cleaning a generator (200) in a wind turbine, the method (100) comprising:
locking (101) a rotor (217) of the wind turbine,
shutting off (103) the generator (200),
inserting (105) a cleaning agent into the generator (200),
releasing (107) the rotor (217),
circling (109) the rotor (217) using wind energy to circle the rotor without generating electrical energy for at least a given cleaning time,
locking (111) the rotor (217) again,
removing (113) or at least partially removing (113) the cleaning agent from the generator (200), and
releasing (115) the rotor (217).

2. The method (100) according to claim 1, wherein
the removed cleaning agent is analyzed (119) with respect to a criterion specifying the grade of contamination of the cleaning agent, and
in case a grade of contamination is greater than a given threshold, the following steps are repeated until the grade of contamination is less or equal to the threshold:
filling (105) fresh cleaning agent into the generator (200),
releasing (107) the rotor (217),
circling (109) the rotor (217) using wind energy to circle the rotor without generating electrical energy for at least the given cleaning time,
locking (111) the rotor (217) again,
removing (1 13) the contaminated cleaning agent from the generator (200).

3. The method (100) according to claim 2, wherein the criterion comprises a reference color.

4. The method (100) according to any of the preceding claims, wherein shutting (101) off the generator (200) comprises disconnecting electrical connection between the generator (200) and the rest of the turbine.

5. The method (100) according to any of the preceding claims, wherein the method (100) further comprises:
shutting off a cooling system (211) for cooling the generator (200) before filling fresh cleaning agent into the generator (200), and
starting the cooling system (211) before starting the generator (200) for drying the generator (200) from the cleaning agent.

6. The method (100) according to any of the preceding claims, wherein removing (113) the contaminated cleaning agent from the generator (200) comprises
lowering a suction hose into a housing of the rotor (217), and
sucking out the contaminated cleaning agent using a pump.

7. The method (100) according to any of the preceding claims, wherein the fresh cleaning agent is filled into the generator (200) through an opening in a wall of the generator (200) inside a nacelle (207) of the wind turbine.

8. The method (100) according to any of the preceding claims, wherein the cleaning agent is or comprises a grease remover, and wherein the grease remover
is a non-waters-soluble,
is a fluid liquid such that the generator (200) of the wind turbine can be flushed with the grease remover,
has a density larger than 0.5 g/cm3, preferably larger than 0.6 g/cm3, more preferably larger than 0.7 g/cm3, furthermore preferably larger than 0.75 g/cm³, and/or lower than 0.9 g/cm3, preferably lower than 0.85 g/cm3, more preferably lower than 0.82 g/cm3, furthermore preferably lower than 0.8 g/cm³, and/or wherein the density is essentially 0.77 g/cm3,
has kinematic viscosity larger than 1.0 mm²/s, preferably larger than 1.3 mm²/s, more preferably larger than 1.5 mm²/s, furthermore preferably larger than 1.8 mm²/s, and/or lower than 3.0 mm²/s, preferably lower than 2.5 mm²/s, more preferably lower than 2.0 mm²/s, furthermore preferably lower than 1.9 mm²/s, and/or wherein the kinematic viscosity is essentially 1.88 mm²/s, and/or
comprises N-Paraffins, hydrocarbons, aliphatic hydrocarbons, mechanical components, such as abrasives and chemical components, such as bipolar chains, and/or a binder.

9. The method (100) according to any of the preceding claims, wherein the volume of cleaning agent filled in the generator (200) is between 30 and 50 liters.

10. The method (100) according to any of the preceding claims, comprising
measuring a voltage at the generator (200), and in particular
wherein the filling fresh cleaning agent into the generator (200) is carried out only in case the measured voltage is zero.

11. A method for operating a wind turbine, in particular an offshore wind turbine, further in particular a floating offshore wind turbine, and/or for feeding electrical and/or chemical energy to an electricity and/or chemical grid, the method comprising the following steps:
executing steps of an embodiment of a method (100) according to any of claim 1 to 10,
generating, by the wind turbine, electrical power and/or electrical energy, and in particular generating at least partially from the electrical energy, further in particular, by transforming electrical energy into hydrogen by electrolysis, chemical energy in form of a gas or liquid, in particular in the form of hydrogen,
transmitting, at least partially, the electrical power, the electrical energy, and/or the chemical energy to an energy receiving arrangement, in particular wherein the receiving arrangement is not positioned in international waters, is positioned onshore, and/or is positioned within a 12-miles-zone of a respective sovereign national state over which the respective state has jurisdiction, and
supplying, at least partially, the electrical power, the electrical energy, and/or the chemical energy to an electrical and/or chemical utility grid, in particular to an onshore electrical and/or chemical utility grid and/or chemical/electrical storage.

## Patentansprüche

1. Verfahren (100) zum Reinigen eines Generators (200) in einer Windturbine, wobei das Verfahren (100) umfasst:
Feststellen (101) eines Rotors (217) der Windturbine,
Abschalten (103) des Generators (200),
Einführen (105) eines Reinigungsmittels in den Generator (200), Freigeben (107) des Rotors (217),
Kreisenlassen (109) des Rotors (217) unter Verwendung von Windenergie, um den Rotor für wenigstens eine gegebene Reinigungszeit ohne Erzeugung von elektrischer Energie kreisen zu lassen,
erneut Feststellen (111) des Rotors (217),
Entfernen (113) oder wenigstens teilweises Entfernen (113) des Reinigungsmittels aus dem Generator (200) und
Freigeben (115) des Rotors (217).

2. Verfahren (100) nach Anspruch 1, wobei
das entfernte Reinigungsmittel hinsichtlich eines Kriteriums analysiert (119) wird, das den Verunreinigungsgrad des Reinigungsmittels spezifiziert, und
falls ein Verunreinigungsgrad höher als ein vorgegebener Schwellenwert ist, die folgenden Schritte wiederholt werden, bis der Verunreinigungsgrad kleiner als der oder gleich dem Schwellenwert ist:
Füllen (105) von frischem Reinigungsmittel in den Generator (200),
Freigeben (107) des Rotors (217),
Kreisenlassen (109) des Rotors (217) unter Verwendung von Windenergie, um den Rotor für wenigstens die gegebene Reinigungszeit ohne Erzeugung von elektrischer Energie kreisen zu lassen,
erneut Feststellen (111) des Rotors (217),
Entfernen (1 13) des verunreinigten Reinigungsmittels aus dem Generator (200).

3. Verfahren (100) nach Anspruch 2, wobei das Kriterium eine Referenzfarbe umfasst.

4. Verfahren (100) nach einem der vorstehenden Ansprüche, wobei Abschalten (101) des Generators (200) Trennen der elektrischen Verbindung zwischen dem Generator (200) und dem Rest der Turbine umfasst.

5. Verfahren (100) nach einem der vorstehenden Ansprüche, wobei das Verfahren (100) ferner umfasst:
Abschalten eines Kühlsystems (211) zum Kühlen des Generators (200) vor Füllen von frischem Reinigungsmittel in den Generator (200), und
Starten des Kühlsystems (211) vor Starten des Generators (200) zum Trocknen des Generators (200) von dem Reinigungsmittel.

6. Verfahren (100) nach einem der vorstehenden Ansprüche, wobei Entfernen (113) des verunreinigten Reinigungsmittels aus dem Generator (200) umfasst:
Absenken eines Saugschlauchs in ein Gehäuse des Rotors (217), und
Heraussaugen des verunreinigten Reinigungsmittels unter Verwendung einer Pumpe.

7. Verfahren (100) nach einem der vorstehenden Ansprüche, wobei das frische Reinigungsmittel durch eine Öffnung in einer Wand des Generators (200) im Inneren einer einer Gondel (207) der Windturbine in den Generator (200) gefüllt wird.

8. Verfahren (100) nach einem der vorstehenden Ansprüche, wobei das Reinigungsmittel ein Fettentferner ist oder umfasst und wobei der Fettentferner
nicht wasserlöslich ist,
eine fluide Flüssigkeit ist, so dass der Generator (200) der Windturbine mit dem Fettentferner durchspült werden kann,
eine Dichte von höher als 0,5 g/cm3, vorzugsweise höher als 0,6 g/cm3, bevorzugter höher als 0,7 g/cm3, weiter bevorzugt höher als 0,75 g/cm3 und/oder niedriger als 0,9 g/cm3, vorzugsweise niedriger als 0,85 g/cm3, bevorzugter niedriger als 0,82 g/cm3, weiter bevorzugt niedriger als 0,8 g/cm3, aufweist und/oder wobei die Dichte im Wesentlichen 0,77 g/cm3 beträgt,
eine kinematische Viskosität von höher als 1,0 mm²/s, vorzugsweise höher als 1,3 mm²/s, bevorzugter höher als 1,5 mm²/s, weiter bevorzugt höher als 1,8 mm²/s, und/oder niedriger als 3,0 mm²/s, vorzugsweise niedriger als 2,5 mm²/s, bevorzugter niedriger als 2,0 mm²/s, weiter bevorzugt niedriger als 1,9 mm²/s, aufweist und/oder wobei die kinematische Viskosität im Wesentlichen 1,88 mm²/s beträgt, und/oder
N-Paraffine, Kohlenwasserstoffe, aliphatische Kohlenwasserstoffe, mechanische Komponenten, wie z.B. Abrasivstoffe, und chemische Komponenten, wie z.B. bipolare Ketten, und/oder ein Bindemittel umfasst.

9. Verfahren (100) nach einem der vorstehenden Ansprüche, wobei das Volumen an in den Generator (200) gefülltem Reinigungsmittel zwischen 30 und 50 Liter beträgt.

10. Verfahren (100) nach einem der vorstehenden Ansprüche, umfassend
Messen einer Spannung an dem Generator (200), und insbesondere wobei das Füllen von frischem Reinigungsmittel in den Generator (200) nur in dem Fall durchgeführt wird, dass die gemessene Spannung Null beträgt.

11. Verfahren zum Betreiben einer Windturbine, insbesondere einer Offshore-Windturbine, ferner insbesondere einer schwimmenden Offshore-Windturbine, und/oder zum Einspeisen von elektrischer und/oder chemischer Energie in ein elektrisches und/oder chemisches Netz, wobei das Verfahren die folgenden Schritte umfasst:
Ausführen von Schritten einer Ausführungsform eines Verfahrens (100) nach einem der Ansprüche 1 bis 10,
Erzeugen von elektrischem Strom und/oder elektrischer Energie durch die Windturbine, und insbesondere Erzeugen wenigstens teilweise aus der elektrischen Energie, ferner insbesondere durch Umwandlung von elektrischer Energie in Wasserstoff durch Elektrolyse, von chemischer Energie in der Form eines Gases oder einer Flüssigkeit, insbesondere in der Form von Wasserstoff,
wenigstens teilweises Übertragen des elektrischen Stroms, der elektrischen Energie und/oder der chemischen Energie an eine Energieaufnahmeanordnung, insbesondere wobei die Aufnahmeanordnung nicht in internationalen Gewässern angeordnet ist, an Land angeordnet ist und/oder innerhalb einer 12-Meilen-Zone eines entsprechenden souveränen Nationalstaats angeordnet ist, über die der entsprechende Staat Gerichtsbarkeit ausübt, und
wenigstens teilweise Liefern des elektrischen Stroms, der elektrischen Energie und/oder der chemische Energie in ein elektrisches und/oder chemisches Versorgungsnetz, insbesondere in ein elektrisches und/oder chemisches Versorgungsnetz an Land, und/oder an chemische/elektrische Speicher.

## Revendications

1. Procédé (100) de nettoyage d'un générateur (200) dans une éolienne, le procédé (100) comprenant les étapes consistant à :
verrouiller (101) un rotor (217) de l'éolienne,
mettre en arrêt (103) le générateur (200),
insérer (105) un agent de nettoyage dans le générateur (200),
libérer (107) le rotor (217),
faire tourner (109) le rotor (217) en utilisant l'énergie éolienne pour faire tourner le rotor sans générer d'énergie électrique durant au moins un temps de nettoyage donné,
verrouiller (111) à nouveau le rotor (217),
éliminer (113) ou au moins partiellement éliminer (113) l'agent de nettoyage du générateur (200), et
libérer (115) le rotor (217).

2. Procédé (100) selon la revendication 1, dans lequel
l'agent de nettoyage éliminé est analysé (119) concernant un critère spécifiant le niveau de contamination de l'agent de nettoyage, et
dans le cas où un niveau de contamination est supérieur à un seuil donné, les étapes suivantes sont répétées jusqu'à ce que le niveau de contamination soit inférieur ou égal au seuil :
remplir (105) de l'agent de nettoyage frais dans le générateur (200),
libérer (107) le rotor (217),
faire tourner (109) le rotor (217) en utilisant de l'énergie éolienne pour faire tourner le rotor sans générer d'énergie électrique durant au moins le temps de nettoyage donné,
verrouiller (111) à nouveau le rotor (217),
éliminer (113) l'agent de nettoyage contaminé du générateur (200).

3. Procédé (100) selon la revendication 2, dans lequel le critère comprend une couleur de référence.

4. Procédé (100) selon l'une quelconque des revendications précédentes, dans lequel l'arrêt (101) du générateur (200) comprend la déconnexion de la connexion électrique entre le générateur (200) et le reste de l'éolienne.

5. Procédé (100) selon l'une quelconque des revendications précédentes, dans lequel le procédé (100) comprend en outre les étapes consistant à :
arrêter un système de refroidissement (211) pour refroidir le générateur (200) avant de remplir de l'agent de nettoyage frais dans le générateur (200), et démarrer le système de refroidissement (211) avant de démarrer le générateur (200) pour assécher le générateur (200) de l'agent de nettoyage.

6. Procédé (100) selon l'une quelconque des revendications précédentes, dans lequel l'élimination (113) de l'agent de nettoyage contaminé du générateur (200) comprend les étapes consistant à
abaisser un tuyau d'aspiration dans un logement du rotor (217), et
aspirer l'agent de nettoyage contaminé en utilisant une pompe.

7. Procédé (100) selon l'une quelconque des revendications précédentes, dans lequel l'agent de nettoyage frais est rempli dans le générateur (200) à travers une ouverture dans une paroi du générateur (200) à l'intérieur d'une nacelle (207) de l'éolienne.

8. Procédé (100) selon l'une quelconque des revendications précédentes, dans lequel l'agent de nettoyage est, ou comprend, un agent d'élimination de graisse, et dans lequel l'agent d'élimination de graisse
n'est pas soluble dans l'eau,
est un liquide fluide de sorte que le générateur (200) de l'éolienne peut être purgé de l'agent d'élimination de graisse,
présente une densité supérieure à 0,5 g/cm³, préférablement supérieure à 0,6 g/cm³, plus préférablement supérieure à 0,7 g/cm³, en outre plus préférablement supérieure à 0,75 g/cm³, et/ou inférieure à 0,9 g/cm³, préférablement inférieure à 0,85 g/cm³, plus préférablement inférieure à 0,82 g/cm³, en outre plus préférablement inférieure à 0,8 g/cm³, et/ou dans lequel la densité est sensiblement de 0,77 g/cm³,
présente une viscosité cinématique supérieure à 1,0 mm²/s, préférablement supérieure à 1,3 mm²/s, plus préférablement supérieure à 1,5 mm²/s, en outre plus préférablement supérieure à 1,8 mm²/s, et/ou inférieure à 3,0 mm²/s, préférablement inférieure à 2,5 mm²/s, plus préférablement inférieure à 2,0 mm²/s, en outre plus préférablement inférieure à 1,9 mm²/s, et/ou dans lequel la viscosité cinématique est sensiblement de 1,88 mm²/s, et/ou
comprend des *N*-paraffines, des hydrocarbures, des hydrocarbures aliphatiques, des composants mécaniques, tels que des abrasifs et des composants chimiques, tels que des chaînes bipolaires, et/ou un agent de liaison.

9. Procédé (100) selon l'une quelconque des revendications précédentes, dans lequel le volume de l'agent de nettoyage rempli dans le générateur (200) est compris entre 30 et 50 litres.

10. Procédé (100) selon l'une quelconque des revendications précédentes, comprenant les étapes consistant à
mesurer une tension au niveau du générateur (200), et en particulier
dans lequel le remplissage d'agent de nettoyage frais dans le générateur (200) est exécuté uniquement dans un cas où la tension mesurée est nulle.

11. Procédé de fonctionnement d'une éolienne, en particulier d'une éolienne offshore, en outre en particulier d'une éolienne offshore flottante, et/ou d'alimentation d'énergie électrique et/ou chimique à un réseau d'électricité et/ou chimique, le procédé comprenant les étapes suivantes consistant à :
exécuter des étapes d'un mode de réalisation d'un procédé (100) selon l'une quelconque des revendications 1 à 10,
générer, par l'éolienne, de la puissance électrique et/ou de l'énergie électrique, et en particulier générer au moins partiellement à partir de l'énergie électrique, en outre en particulier, en transformant l'énergie électrique en hydrogène par électrolyse, l'énergie chimique sous la forme d'un gaz ou d'un liquide, en particulier sous la forme d'hydrogène,
transmettre, au moins partiellement, la puissance électrique, l'énergie électrique, et/ou l'énergie chimique à un agencement de réception d'énergie, en particulier dans lequel l'agencement de réception n'est pas positionné dans des eaux internationales, est positionné sur terre, et/ou est positionné dans une zone de 12 miles d'un état national souverain respectif sur lequel l'état respectif possède une juridiction, et
alimenter, au moins partiellement, la puissance électrique, l'énergie électrique, et/ou l'énergie chimique à un réseau de distribution électrique et/ou chimique, en particulier à un réseau de distribution électrique et/ou chimique et/ou à un stockage chimique/électrique terrestre.
